# EUROPÄISCHE PATENTSCHRIFT

(11) **EP 3 915 661 B1**
(45) Veröffentlichungstag und Bekanntmachung des Hinweises auf die Patenterteilung: **14.12.2022**
(21) Anmeldenummer: 21175097.1
(22) Anmeldetag: 20.05.2021
(51) Int. Cl.: B01D 21/18, C02F 3/00, C02F 3/12, C02F 1/00

(54) **FLÜSSIGKEITSBEHANDLUNGSEINRICHTUNG, VORZUGSWEISE FÜR EINE KLÄRANLAGE**
LIQUID TREATMENT DEVICE, PREFERABLY FOR A SEWAGE TREATMENT PLANT
DISPOSITIF DE TRAITEMENT DES LIQUIDES, AVANTAGEUSEMENT POUR UNE INSTALLATION D'ÉPURATION DES EAUX

(30) Priorität: 28.05.2020 DE 102020114402; 03.07.2020 DE 102020117553
(43) Veröffentlichungstag der Anmeldung: 01.12.2021
(73) Patentinhaber: Friedrich Krumme GmbH, 36251 Bad Hersfeld (DE)
(72) Erfinder: Krumme, Friedrich, 36251 Bad Hersfeld (DE)
(74) Vertreter: Möller, Friedrich

(56) Entgegenhaltungen:
- EP-A1- 1 088 579
- DE-A1- 19 701 143
- DE-A1-102004 025 174
- DE-U1- 20 110 104

## Beschreibung

Die Erfindung betrifft eine Flüssigkeitsbehandlungseinrichtung für vorzugsweise eine Kläranlage gemäß dem Oberbegriff des Anspruchs 1.

Flüssigkeitsbehandlungseinrichtungen für insbesondere Kläranlagen zur Behandlung, Reinigung und/oder Wiederaufbereitung von Abwässern verfügen über ein Behanldungsbecken und eine Räumerbrücke. Statt einer Räumerbrücke kann auch eine Lüfterbrücke vorgesehen sein. Im Folgenden wird der Einfachheit halber von einer Räumerbrücke gesprochen, ohne dass die Erfindung hierauf beschränkt sein soll. Vielmehr bezieht sich die Erfindung auch auf Lüfterbrücken, womit die Erfindung genauso realsierbar ist wie mit Räumerbrücken.

Das Behandlungsbecken ist üblicherweise kreisrund ausgebildet. Mit einem solchen kreisrunden Behandlungsbecken wird die Erfindung nachfolgend erläutert, ohne hierauf beschränkt zu sein. Es lässt sich die Erfindung auch bei rechteckigen oder quadratischen Behandlungsbecken realisieren.

Das Behandlungsbecken verfügt über eine umlaufende Wandung mit einem oberen Rand, die im Fachjargon auch als "Beckenkrone" bezeichnet wird. Auf dem oberen Rand der Wandung des Behandlungsbeckens ist üblicherweise eine Abdeckung befestigt. In der Regel ist eine solche Abdeckung aus Stahl, vorzugsweise aus rostfreiem Edelstahl, mit einer relativ glatten Oberfläche gebildet. Die Räumerbrücke weist einen über die Behandlungsbecken radial oder diametral verlaufenden Träger auf. Der Träger verfügt mindestens an einem Ende über ein Laufwerk mit mindestens einem Laufrad, dass sich auf der Abdeckung des oberen Rands des Behandlungsbeckens abstützt und sich auf der Abdeckung zur Weiterbewegung der Räumerbrücke über das Behandlungsbecken abwälzt. Dadurch dient die Oberseite der Abdeckung als Lauffläche für das mindestens eine Laufrad des Laufwerks der Räumerbrücke.

Kläranlagen werden das ganze Jahr über betrieben. Als problematisch hat sich die kalte Jahreszeit erwiesen. Dann beeinträchtigen Eis und Schnee auf der Lauffläche der Abdeckung das Entlangfahren des Laufrads des mindestens einen Laufwerks der Räumerbrücke auf der Abdeckung des Behandlungsbeckens. Ein durch Eis und/oder Schnee hervorgerufener Stillstand der Räumerbrücke hat Betriebsstörungen der Kläranlage zur Folge. Deshalb ist es aus der DE 197 01 143 A1 und der EP 1 088 579 A1 bereits bekannt, elektrisch betriebene Heizungen vorzusehen. Diese sind einer Unterseite der Abdeckung zugeordnet; meist am oberen Rand der Behandlung des Behandlungsbeckens eingelassen. Eine solche Heizung der Abdeckung erfordert viel elektrische Energie, was sich kostenintensiv auf den Betrieb des Klärwerks auswirkt. Außerdem macht bei starkem Schneefall oder Eisregen die elektrische Heizung der Lauffläche der Abdeckung nicht sofort schnee- bzw. eisfrei. Dadurch kann es trotz beheizbarer Abdeckungen zu - wenn auch nur temporären - Unterbrechungen bei der Weiterbewegung der Räumerbrücke kommen.

Aus der DE 10 2004 025 174 A1 ist es bekannt, bei einer auf einer Beckenkrone eines Behandlungsbeckens verfahrenbaren Räumerbrücke mit sich auf der Beckenkrone abstützenden Laufwerken vor den Laufwerken ein Gebläse, einen Heizstrahler und einen Abstreifer anzuordnen. Zusätzlich zum Abstreifer befreien der Heizstrahler und das Gebläse die Beckenkrone von Eis und Schnee. Dazu wird auch elektrische Energie benötigt, wodurch diese Art der Eis- und Schneebeseitigung ebenfalls kostenintensiv ist. Aus der DE 201 10 104 U1 ist eine Räumvorrichtung für Behandlungsbecken mit einer Räumerbrücke bekannt, deren Laufwerk einen Antrieb aufweist, der als Giromagnetmotoren ausgeführte Getriebemotoren umfasst. Die Mantelflächen der Laufräder können mit einer Profilierung versehen sein. Maßnahmen und Einrichtungen zur Befreiung der Lauffläche des oberen Rands der umlaufenden Wandung des Behandlungsbeckens von insbesondere Eis und Schnee sind hier nicht vorgesehen.

Ausgehend vom Vorstehenden liegt der Erfindung die Aufgabe zugrunde, eine Flüssigkeitsbehandlungseinrichtung, vorzugsweise eine Kläranlage, zu schaffen, die ohne eine energieaufwendige elektrische Beheizung der Lauffläche der Abdeckung ganzjährig einen ununterbrochenen Antrieb der Räumerbrücke gewährleistet.

Eine Flüssigkeitsbehandlungseinrichtung zur Lösung dieser Aufgabe weist die Merkmale des Anspruchs 1 auf. Bei dieser Flüssigkeitsbehandlungseinrichtung ist es vorgesehen, in Bewegungsrichtung des Laufwerks gesehen vor demselben ein flexibles Räumschild vorzusehen, mindestens die Lauffläche der Abdeckung quer zur Bewegungsrichtung des Laufwerks der Räumerbrücke ballig auszubilden zur Schaffung einer mittigen Überhöhung der Laufwerkfläche und das oder jedes Laufrad des oder des jeweiligen Laufwerks mit einer profilierten Mantelfläche zu versehen. Die Kombination dieser Merkmale gewährleistet, dass kein Wasser auf der balligen Lauffläche stehen bleibt, vom Räumschild insbesondere Schnee zuverlässig von der Lauffläche der Abdeckung abgeschoben werden kann und das mindestens eine Laufrad des oder des jeweiligen Laufwerks der Räumerbrücke durch seine Profilierung genügend Haftung (Grip) auf der Lauffläche hat, um die Räumerbrücke ununterbrochen weiterzubewegen, um selbst größere Mengen Schnee vom Räumschild entfernen zu können.

Bevorzugt ist die Räumerbrücke so ausgebildet, dass das Räumschild flexibel und/oder höhenveränderlich bzw. höhenverstellbar und/oder einstellbar Anpresskraft gegen die Laufflächen vor dem jeweiligen Laufwerk der Räumerbrücke befestigt ist. Dadurch ist das Räumschild bevorzugt selbsttätig mit gewünschter Anpresskraft an die vorherrschenden Gegebenheiten anpassbar. Beispielsweise kann das Räumschild Unebenheiten der Abdeckung und/oder ihrer Lauffläche, exakt folgen.

Weiterhin ist das Räumschild bevorzugt mit einer parallelogrammartigen Aufhängung vor den Träger der Räumerbrücke, vorzugsweise vor dem jeweiligen an einem Endbereich des Trägers angeordneten Laufwerk desselben, gelagert. Diese Lagerung geschieht insbesondere derart, dass das Räumschild mittels der Aufhängung vor dem Laufwerk in Fahrtrichtung desselben flexibel aufgehängt ist. Dadurch folgt das mindestens eine Laufrad des Laufwerks dem Räumschild nach. Es kann sich so das mindestens eine Laufrad auf der vom Räumschild bereits geräumten, insbesondere von Schnee und/oder Eis befreiten, Lauffläche entlangbewegen.

Gemäß einer vorteilhaften Weiterbildungsmöglichkeit der Räumerbrücke ist das Räumschild in mindestens einem vorzugsweise elastischen und/oder flexiblen Abstreifer versehen. Besonders vorteilhaft ist es, wenn das Räumschild zwei mit geringem Abstand hintereinander angeordnete elastische und/oder flexible Abstreifer aufweist. Dadurch wird vom Räumschild die Lauffläche der Abdeckung des Rands des Behandlungsbeckens sozusagen mehrfach, insbesondere zweimal hintereinander, von Hindernissen wie zum Beispiel Schnee auf der Lauffläche geräumt, und zwar vorzugsweise mindestens größtenteils befreit.

Eine flexible, federnd vorgespannte Aufhängung des Räumschilds vor dem Laufwerk der Räumerbrücke gemäß einer vorteilhaften Weiterbildungsmöglichkeit der Erfindung führt zu einem Andrücken des Räumerschilds, vorzugsweise des mindestens einen flexiblen und/oder elastischen Abstreifers desselen, gegen die Lauffläche der Abdeckung. Vorteilhafterweise ist die Andrückkraft bzw. Anpresskraft bedarfsgerecht einstellbar und/oder verstellbar.

Bevorzugt sind die beiden aufeinanderfolgenden Abstreifer des Räumschilds aus unterschiedlich harten und/oder elastischen bzw. flexiblen Material, vorzugsweise Gummi oder einem anderen Elastomer, gebildet. Dadurch wird vom ersten Abstreifen von der Laufläche größtenteils vorgeräumt, insbesondere von einem Großteil des sich auf der Abdeckung ansammelnden Schnees befreit, wobei der nachfolgende zweite weichere, elastische Abstreifer Reste von Schnee oder sonstigen Ablagerungen von der Lauffläche abschiebt, sodass danach das mindestens eine nachfolgende Laufrad des oder jedes Laufwerks der Räumerbrücke ohne störende Ablagerungen auf der Abdeckung auf der Lauffläche derselben mit ausreichendem Grip entlangrollen bzw. entlangfahren kann.

Der mindestens eine Abstreifer des Räumschilds ist bevorzugt aus einem Material gebildet und so ausgebildet und bemessen, dass er sich elastisch und/oder flexibel an die gewölbte und/oder ballige Lauffläche der Abdeckung auf der Wandung des Behandlungsbeckens anschmiegt. Dadurch ist gewährleistet, dass die Lauffläche der Abdeckung in ihrer gesamten Breite zuverlässig in ausreichendem Maße geräumt wird, sodass sich das jeweilige Laufwerk mit dem mindestens einen Laufrad ungehindert und ungestört mit geringstmöglichem Rollwiderstand auf der Abdeckung entlangbewegen kann und dadurch die Räumerbrücke störungsfrei ununterbrochen weiterbewegbar ist und dadurch von der Räumerbrücke Flüssigkeit, insbesondere Abwasser, im Behandlungsbecken durchgehend durchkämmt und/oder belüftet werden kann.

Eine vorteilhafte Weiterbildungsmöglichkeit der Räumerbrücke sieht es vor, dass das Räumschild und/oder der mindestens eine Abstreifer desselben mittels der Aufhängung höhenveränderlich und/oder höhenverstellbar sind. Mindestens ist eine zwei Stellungen erlaubende Höhenverstellung möglich, und zwar von einer Betriebsstellung, in der der mindestens eine Abstreifer sich selbsttätig und flexibel an die Lauffläche der Abdeckung sich anschmiegt und eine Ruhestellung, in der der mindestens eine Abstreifer von der Lauffläche abgehoben ist. Dadurch kann in der Betriebsstellung der Räumer die Lauffläche der Abdeckung von zum Beispiel Schnee und/oder Eis befreien, während in der Ruhestellung die Abstreifer die Lauffläche nicht berühren. Diese Ruhestellung eignet sich besonders für Jahreszeiten, in denen kein Schnee oder Eis auf der Abdeckung zu befürchten ist. Dadurch wird der mindestens eine Abstreifer in der Ruhestellung vor mechanischem Abrieb auf der Lauffläche, insbesondere trockenen Lauffläche, geschützt, indem in der Ruhestellung das Räumschild inaktiv ist.

Bei einer vorteilhaften Ausgestaltungsmöglichkeit der Erfindung ist es vorgesehen, dass der mindestens eine Abstreifer des Räumschilds in seiner von der Lauffläche auf der Abdeckung abgehobenen Ruhestellung arretierbar ist. Alternativ oder zusätzlich ist das Räumschild mit dem mindestens einen Abstreifer in der Betriebsstellung gegen die Lauffläche der Abdeckung drückbar, und zwar bevorzugt so, dass die Andruckkraft des mindestens einen Abstreifers veränderbar und/oder einstellbar ist zur Anpassung des Räumschilds an die Bedürfnisse, insbesondere den Umfang der Beeinträchtigung der Lauffläche durch Schnee und/oder Eis. Das geschieht vorzugsweise unter elastischer Verformung und/oder flexibler Anpassung des mindestens einen Abstreifers des Räumschilds an die gewölbte bzw. ballige Lauffläche der Abdeckung. Mit anderen Worten wird das Räumschild so stark in Richtung auf die Laufläche der Abdeckung gedrückt, dass sich eine freie Abstreiferkante des oder jedes Abstreifers über die gesamte Breite der Lauffläche an dieselbe anschmiegt und dadurch die Abstreifkante des mindestens einen Abstreifers lückenlos der balligen Lauffläche über die gesamte Breite derselben folgt. Dadurch ist die Lauffläche trotz ihrer gewölbten bzw. balligen Gestaltung durchgehend über ihre gesamte Breite lückenlos räumbar.

Eine andere vorteilhafte Weiterentwicklungsmöglichkeit der Räumerbrücke (oder Belüfterbrücke) sieht es vor, dass die Aufhängung des Räumschilds mit dem mindestens einen Abstreifer flexibel ausgebildet ist. Die flexible Ausgestaltung der Aufhängung erfolgt vorzugsweise derart, dass die Aufhängung das Räumschild mit dem mindestens einen Abstreifer von oben gegen die Lauffläche der Abdeckung drückt und sich der mindestens eine Abstreifer an den Verlauf der balligen Lauffläche der Abdeckung selbsttätig vollständig und lückenlos anpasst, wodurch ein zuverlässiges Räumen der Lauffläche der Abdeckung gewehrleistet ist.

Bevorzugt ist es vorgesehen, dass das Räumschild mit seinem mindestens einen Abstreifer in der Betriebsstellung von der Aufhängung federvorgespannt und/oder durch die Vorspannkraft mindestens eine Feder gegen die Lauffläche der Abdeckung drückbar ist. Die Federvorspannung ist bevorzugt derart gewählt, dass hierdurch der mindestens eine Abstreifer des Räumschilds durch elastische Verformung flexibel an die gewölbte Lauffläche der Abdeckung anpassbar und/oder anschmiegbar ist. Infolge der Erzeugung des Anpressdrucks der Abstreifkante des mindestens einen Abstreifers gegen die Lauffläche der Abdeckung durch mindestens eine vorgespannte Feder der Aufhängung kann aufgrund der Einstellung der Vorspannung der Anpressdruck der Abstreifkante des mindestens einen Abstreifers an die Lauffläche den Bedürfnissen entsprechend eingestellt und erforderlichenfalls verändert werden, wenn beispielsweise bei geringen Temperaturen die Elastizität des mindestens einen Abstreifers reduziert ist.

Bei einer vorteilhaften Ausgestaltung der Räumerbrücke ist das oder jede Laufwerk des bzw. jedes Laufwerks als ein Vollgummirad mit vorzugsweise einer mittleren Shorehärte zwischen 60 und 75 Shore A, insbesondere 62 bis 72 Shore A, gebildet ist. Zusammen mit der profilierten Mantel- bzw. Lauffläche des jeweiligen Laufrads wird dadurch ein ausreichender Grip des jeweiligen Laufrads auf der Lauffläche der Abdeckung, selbst dann, wenn diese aus einem eine relativ glatte Oberfläche aufweisenden Edelstahl gebildet ist, gewährleistet. Die Profilierung der Mantel- bzw. Lauffläche des Laufrads ist vorteilhafterweise mehrstufig. Die Profilierung entspricht vorzugsweise derjenigen, die bei Reifen von Landfahrzeugen üblich ist. Beispielsweise kann die Profilierung derjenigen von All Terrain Reifen (ATR) entsprechen. Denkbar ist es aber auch, dass das jeweilige Laufrad aus innen ausgeschäumten Luftreifen gebildet ist.

Eine andere vorteilhafte Ausgestaltungsmöglichkeit der Erfindung sieht es vor, dass die mittige Überhöhung der balligen Lauffläche der metallischen Abdeckung gegenüber den seitlichen Rändern der Lauffläche 1 bis 10 mm, vorzugsweise 2 bis 5 mm, beträgt. Eine solche leichte Überhöhung ist ausreichend, um einen Wasserabfluss zu beiden Seiten der Abdeckung zu gewährleisten. So können sich weder Wasseransammlungen noch Eis auf der Lauffläche bilden, wodurch der Grip, nämlich die reibschlüssige Ankopplung, des mindestens einen Laufrads der Räumerbrücke auf der Lauffläche der Abdeckung zu sehr reduziert werden könnte.

Ein bevorzugtes Ausführungsbeispiel der Erfindung wird nachfolgend anhand der Zeichnung näher erläutert. In dieser zeigen:
- Fig. 1: einen schematischen Querschnitt durch einen (rechten) Teil eines Klärwerkbeckens mit einer darüber angeordneten Räumerbrücke,
- Fig. 2: ein vor einem Laufwerk der Räumerbrücke angeordnetes Räumschild in einer Betriebsstellung,
- Fig. 3: eine Ansicht analog zu Fig. 2 bei sich in einer Ruhestellung befindlichem Räumschild, und
- Fig. 4: ein Querschnitt durch einen oberen Randbereich der Wandung des Behandlungsbeckens mit einer Vorderansicht des darauf angeordneten Räumschilds in der Betriebsstellung gemäß Fig. 2.

Von der Flüssigkeitsbehandlungseinrichtung, vorzugsweise Kläranlage, zeigen die Figuren nur einen Teil eines runden bzw. zylindrischen Behandlungsbeckens 10 und einer darüber umlaufend verfahrbaren Räumerbrücke 11. Die Erfindung bezieht sich auf die über dem Behandlungsbecken 10 angeordnete Räumerbrücke 11.

Das runde bzw. zylindrische Behandlungsbecken 10 weist eine ebene Bodenplatte 12 und eine diese umgebende ringförmige, zylindrische Wandung 13 auf. Beim in den Figuren gezeigten zylindrischen Behandlungsbecken 10 verläuft die Wandung 13 senkrecht. Die Wandung 13 verfügt über einen kreisringförmigen oberen Rand 14. Dieser Rand 14 umgibt dadurch eine offene Oberseite des Behandlungsbeckens 10. Auf dem Ortbeton der Wandung 13 ist eine vollflächige Mörtelauflage aufgebracht, und zwar so, dass sie eine innige und dauerhafte Verbindung mit dem Ortbeton eingeht. Die vollflächige Mörtelauflage dient zur Verbesserung der Ebenheit des oberen Randes der Wandung 13, indem die Höhentoleranz der Beckenkrone im Bereich von nur ± 2mm auf 10 m Länge nicht überschreitet.

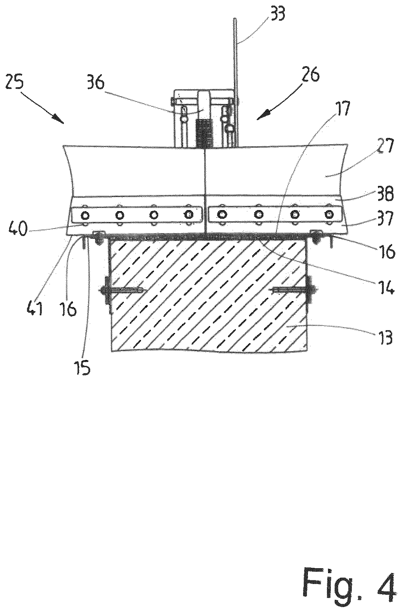

Auf den oberen Rand 14 der Wandung 13 des Behandlungsbeckens 10, nämlich die als Ausgleichsschicht dienende Mörtelauflage, ist eine umlaufende Abdeckung 15 angeordnet. Die Abdeckung 15 ist vorzugsweise fest auf dem Rand 14 angeordnet durch geeignete Verschraubungen oder sonstige Befestigungen mit der Wandung 13. Die Abdeckung 15 ist ebenso wie der Rand 14 der Wandung 13 kreisringförmig ausgebildet und entspricht mindestens der Breite des Randes 14, wobei ggf. die Abdeckung 15 etwas breiter als die Wandung 13 sein kann, sodass gegenüberliegende äußere Kanten 16 der Abdeckung 15 nach innen und außen gegenüber der Wandung 13 geringfügig vorstehen (Fig. 4). Die Kreisringfläche der Abdeckung 15 liegt in einer horizontalen Ebene, die eine Längsmittelachse des Behandlungsbeckens 10 rechtwinklig schneidet. Demzufolge liegen auch die gegenüberliegenden Kanten 16 der Abdeckung 15 in dieser Ebene. Gebildet ist die Abdeckung 15 vorzugsweise aus mehreren aufeinanderfolgenden Abdeckplatten. Benachbarte Abdeckplatten stoßen stumpf aneinander, sodass ein dazu stufenloser Übergang von einer Abdeckplatte zur anderen gegeben ist zur Bildung der Abdeckung 15. Alle Abdeckplatten der Abdeckung 15 sind aus dem gleichen Material gebildet, und zwar einem metallischen Material. Vorzugsweise handelt es sich hierbei um rostfreiem Edelstahl, ggf. auch verzinkten Stahl bzw. Aluminium. Die Abdeckplatten können aber auch aus vorzugsweise bewertem Beton oder sonstigen eine hohe Tragfähigkeiten aufweisenden Materialien gebildet sein.

Die Oberseite der Abdeckung 15 ist leicht gewölbt bzw. ballig ausgebildet zur Bildung einer kreisringförmigen Lauffläche 17 für die Räumerbrücke 11. Auf diese Lauffläche 17 wird weiter unten noch näher eingegangen.

Infolge der Bildung der Abdeckung 15 aus metallischem Material, insbesondere rostfreiem Edelstahl, oder anderen glatte Oberflächen aufweisenden Materialien, ist die Lauffläche 17 relativ glatt. Die gewölbte bzw. ballige Lauffläche 17 wird durch einen entsprechenden Querschnitt der Abdeckung 15 gebildet. Dabei kann nur die die Lauffläche 17 bildende Oberseite der Abdeckung 15 gewölbt oder ballig sein, während die Unterseite eben verläuft. Es kann aber auch die gesamte Abdeckung 15 in sich gewölbt sein, sodass die Ober- und Unterseite der Abdeckung 15 in radialer Richtung des Behandlungsbeckens 10 gleichermaßen gewölbt sind und parallel zueinander verlaufen. Der bogenförmige Verlauf bzw. die Wölbung der Abdeckung 15 ist so getroffen, dass die höchste Stelle, also ein Scheitel, des Querschnitts der Abdeckung 15 sich in der Mitte des Querschnitts der Abdeckung 15 und somit auch mittig zwischen der inneren und äußeren Kante 16 der Abdeckung 17 befindet. Die Wölbung bzw. Balligkeit der Abdeckung 15 ist nur so gering, dass das Ablaufen von Wasser von der Lauffläche 17 zu beiden Seiten derselben gewährleistet ist. Dazu reicht es aus, wenn der höchste mittige Punkt der Abdeckung 15 um 1 mm bis 10 mm, vorzugsweise 2 mm bis 5 mm oder 6 mm, über den auf gleicher Höhe sich gegenüberliegenden inneren und äußeren kreisförmigen Kanten 16 der Abdeckung 15 liegt.

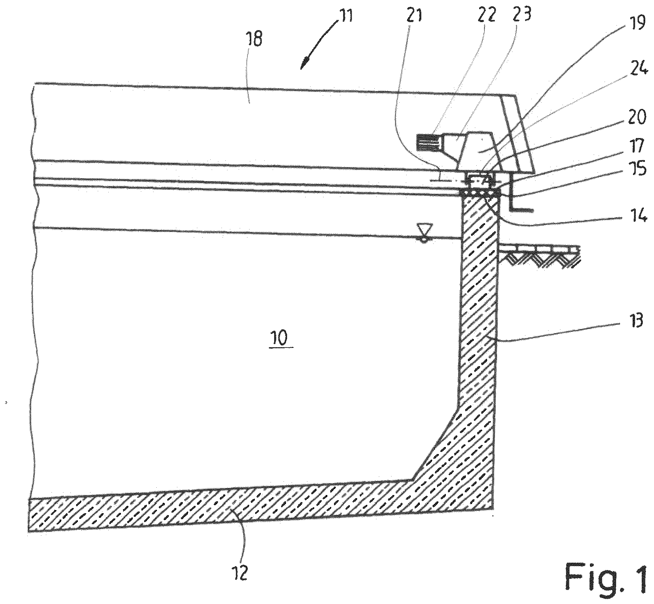

Die Räumerbrücke 11 ist beim hier gezeigten kreisrunden bzw. zylindrischen Behandlungsbecken 10 um eine (nicht gezeigte) mittige Säule auf eine Längsmittelachse des Behandlungsbeckens 10 drehbar gelagert. Die Räumerbrücke 11 verfügt über einen länglichen Träger 18 oder Balken, der sich in radialer Richtung von der mittigen Säule bis über die Wandung 13 des Behandlungsbeckens 10 erstreckt. Unter dem Träger 18 sind die in der Fig. 1 nicht gezeigten Räumermittel, vorzugsweise starr, befestigt. Diese werden beim Drehen der Räumerbrücke 11 um die mittige Säule im Behandlungsbecken 10 durch das Abwasser bewegt. Ein äußerer freier Endbereich des Trägers 18 der Räumerbrücke 11 erstreckt sich über den Rand 14 der Wandung des Behandlungsbeckens 10 geringfügig hinweg und überspannt so die Abdeckung 15 auf dem Rand 14 des Behandlungsbeckens 10 (Fig. 1).

Am oder alternativ vor dem freien äußeren Endbereich des Trägers 18 ist ein Laufwerk 19 vorgesehen, das bei der hier gezeigten Räumerbrücke 11 über ein einziges Laufrad 20 verfügt. Das Laufrad 20 ist um eine radial ausgerichtete, horizontale Drehachse 21 drehend antreibbar, beispielsweise durch einen in der Figur angedeuteten Motor 22, bei dem es sich z. B. um einen Elektromotor oder auch um einen Hydraulikmotor handeln kann. Dem Motor 22 ist ein Getriebe 23 zugeordnet, das als Untersetzungsgetriebe ausgebildet ist, beispielsweise nach Art eines Planetengetriebes. Dadurch wird das Laufrad 20 mit einer relativ geringen Drehzahl angetrieben, damit sich die Räumerbrücke 11 mit der geforderten langsamen Geschwindigkeit über dem Behandlungsbecken 10 dreht. Das Laufrad 20 wälzt sich mit seiner vorzugsweise zylindrischen Mantelfläche 24 auf der Lauffläche 17 der Abdeckung 15 der Wandung 13 des Behandlungsbeckens 10 ab. In der Darstellung der Fig. 1 verfügt das Laufrad 20 über eine Breite, die geringer, insbesondere etwas geringer, als die Breite der Abdeckung 15 ist. Idealerweise wälzt sich das Laufrad 20 mittig über der Abdeckung 15 ab, indem gegenüberliegende Enden des Laufrads 20 gleich weit von den gegenüberliegenden Kanten 16 der Abdeckung 15 entfernt sind. In der Praxis werden aber toleranzbedingte Abweichungen vorherrschen, sodass das Laufrad 20 nicht oder nicht immer mittig über die Lauffläche 17 der Abdeckung 15 läuft.

Das Laufrad 20 ist aus einem Elastomer, insbesondere Gummi, gebildet. Bevorzugt besteht das Laufrad 20 aus einem Elastomer mittlerer Härte und/oder Festigkeit, beispielsweise einer Härte im Bereich von 60 bis 75 Shore A, insbesondere 62 bis 72 Shore A. Das Laufrad 20 kann aber auch aus verschiedenen Elastomeren mit unterschiedlichen Härten gebildet sein, wobei ein äußerer Laufring, den die Mantelfläche 24 umgibt, die geringste Härte aufweist. Das Laufrad 20 ist bevorzugt als Vollgummilaufrad ausgebildet. Gegebenenfalls kann es aber auch als Luftreifen ausgebildet sein, der dann vorzugsweise im Inneren nicht mit Luft gefüllt sondern ausgeschäumt ist. Die Mantelfläche 24 des Laufrads 20 ist profiliert, bevorzugt mehrstufig profiliert. Dazu weist die Mantelfläche 24 eine Profilierung auf, wie es bei Reifen von Landfahrzeugen, insbesondere Nutzfahrzeugen, üblich ist. Beispielsweise handelt es sich um ein Profil von ATV- bzw. ATR-Reifen. In Kombination mit einer mittelharten Gummimischung mindestens im Bereich der Profilierung des Laufrads 20 wird sichergestellt, dass dieses über einen ausreichenden Grip auf der Lauffläche 17 der Abdeckung 15 verfügt, insbesondere auf der Lauffläche 17 bei aus rostfreiem Edelstahl oder ähnlichen Materialien mit relativ glatter Oberfläche gebildeten Abdeckung 15. Dadurch kann das angetriebene Laufrad 20 die Räumerbrücke 11 aufgrund ausreichender Haftung auf der Lauffläche 17 mit ausreichender Antriebskraft um die mittige Säule des Behandlungsbeckens 10 drehen.

Die Räumerbrücke 11 weist ein Räumschild 25 auf. Das Räumschild 25 ist in Bewegungs- bzw. Drehrichtung der Räumerbrücke 11 vor derselben angeordnet. Diese Anordnung ist derart getroffen, dass das Räumschild 25 vor dem Laufwerk 19 befestigt ist. Diese Befestigung erfolgt derart, dass das Räumschild 25 flexibel am die Lauffläche 17 anpassbar und/oder höhenveränderlich ist und sich dadurch selbsttätig an den Verlauf der Lauffläche 17 insbesondere durch elastische Verformung anpassen kann, vorzugsweise mit einstellbarer und/oder veränderbarer Anpresskraft.

Das Räumschild 25 weist eine Aufhängung 26, einen Schildkörper 27 und im gezeigten Ausführungsbeispiel zwei in Bewegungsrichtung der Räumerbrücke 11 hintereinander am, vorzugsweise unter, dem Schildkörper 27 angeordneter Abstreifer auf.

Die Aufhängung 26 ist parallelogrammartig ausgebildet. Sie besteht aus zwei mit Abstand nebeneinander angeordnete, vorzugsweise gleiche Parallelogramme aus jeweils zwei mit Abstand übereinander angeordneten Armen 29 und zwei parallelen aufrechten Laschen 30. Die Enden der Arme 29 und der Laschen 30 sind durch insgesamt vier Gelenke 31 miteinander verbunden, die eine Verschwenkung der Arme 29 gegenüber den Laschen 30 ermöglichen. Jedes Gelenk 31 verfügt über eine horizontale radial zum Behandlungsbecken 10 verlaufende Gelenkachse. Infolge dieser gelenkigen Verbindungen der Arme 29 mit den Laschen 30 an ihren jeweils benachbarten Eckpunkten kommt die parallelogrammartige Ausbildung der Aufhängung 26 zustande, wobei sowohl die Arme 29 als auch die Laschen 30 stets parallel zueinander verlaufen, sich ihr Abstand aber je nach Stellung der beiden Parallelogramme der Aufhängung 26 verändern.

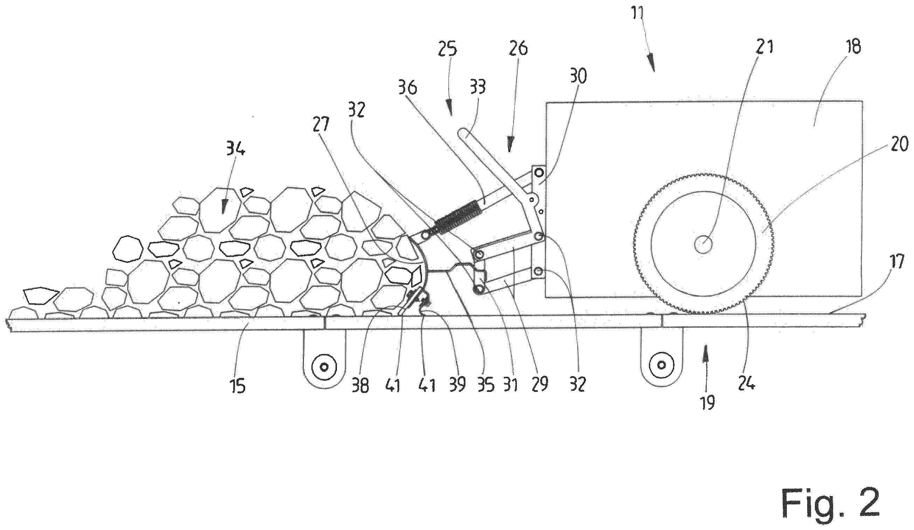

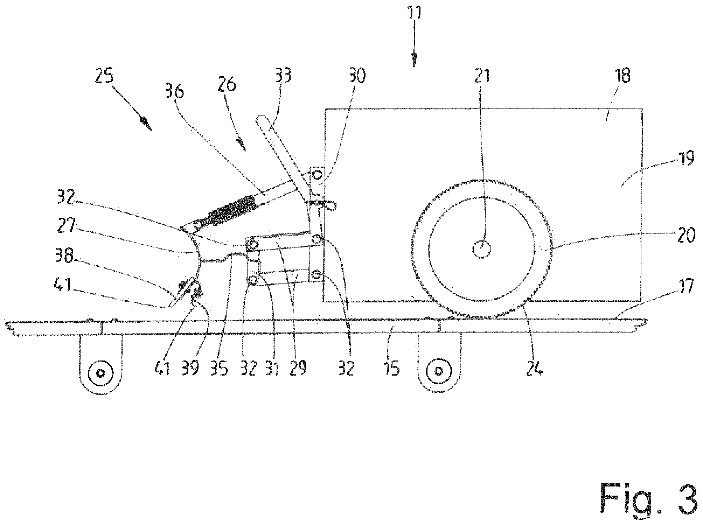

Eine längere Lasche 30 jedes Parallelogramms der Aufhängung 26 ist ortsfest vor dem Laufwerk 19 befestigt. Eine in Bewegungsrichtung der Räumerbrücke 11 vor der längeren Lasche 30 sich befindende, kürzere Lasche 31 jedes Parallelogramms der Aufhängung 26 ist durch Verschwenkung der Arme 29 auf- und abbewegbar, ohne ihre senkrechte Ausrichtung zu ändern (Fig. 2 und 3). Das zur Lasche 30 weisende Ende des Arms 29 ist mit einem Betätigungsarm 33 fest verbunden. Der Betätigungsarm 33 und der ihm zugeordnete Arm 29 der Aufhängung 26 bilden somit einen doppelarmigen Hebel. Durch Verschwenken des Betätigungsarms 33 sind die Arme 29 gleichzeitig verschwenkbar. Dadurch ändert sich die Höhe der vorderen, kürzen Lasche 31 jedes Parallelogramms der Aufhängung 26. Bei hochbewegter Aufhängung 26 kann der Betätigungsarm 33 durch einen Steckbolzen an der längeren, fest mit dem Laufwerk 19 verbundenen Lasche 30 formschlüssig arretiert werden. Dabei befindet sich das Räumschild 25 in der Ruhestellung (Fig. 3).

Der Schildkörper 27 ist nach Art eines üblichen Schneeräumschilds ausgebildet, indem er in Querschnittsrichtung über einen gewölbten Verlauf verfügt. Der Schildkörper 27 erstreckt sich über die gesamte Breite der Abdeckung 15 auf dem oberen Rand 14 der Wandung 13 des Behandlungsbeckens 10. Im gezeigten Ausführungsbeispiel ragen gegenüberliegende Enden des Schildkörpers 27 etwas seitlich über die gegenüberliegenden Kanten 16 der Abdeckung 15 hinweg. Dadurch kann der Schildkörper 27 die Abdeckung 15 auf der gesamten Breite von z. B. Schnee befreien. Der in den Figuren gezeigten Schildkörper 27 ist von oben gesehen V-förmig ausgebildet, sodass er pflugartig arbeitet. Dazu sind gegen die von einer Mitte des Schildkörpers 27 ausgehende Hälften desselben gegensinnig geneigt, und zwar so, dass die Mitte des Schildkörpers weiter von der Aufhängung 26 beabstandet ist als die gegenüberliegenden äußeren Ränder des Schildkörpers 27. Hierdurch wird der sich vor dem Schildkörper 27 sammelnde Schnee 34 ebenso wie andere Fremdkörper auf der Abdeckung 15 zu gegenüberliegenden Seiten der Abdeckung 15 von derselben abgeleitet.

Alternativ ist es denkbar, den Schildkörper 27 nicht pflugartig, sondern in Draufsicht gesehen gradlinig auszubilden. Ein solcher Schildkörper 27 ist dann nicht tangential zur kreisringförmigen Abdeckung 15 ausgerichtet sondern schräg dazu unter einem Winkel, der ausreicht, um den sich vor dem Räumschild 25 sammelnden Schnee 34 oder dergleichen zu einer Seite von der Abdeckung 15 wegzuschieben, vorzugsweise über die innenliegende Kante 16 der Abdeckung 15.

Der Schildkörper 27 ist rückseitig mit der Aufhängung 26, vorzugsweise jedem Parallelogramm derselben, fest verbunden. Dazu ist die Rückseite des Schildkörpers 27 im Bereich jedes Parallelogramms der Aufhängung 26 mit einem Halter 35 versehen, der mit der kürzeren auf- und abbewegbaren Lasche 31 der Aufhängung 26 verbunden ist. Diese Verbindung kann starr, aber auch flexibel sein, in dem der Halter 25 seine Form elastisch verändern kann.

Die Aufhängung 26 verfügt des Weiteren über mindestens einen längenveränderlichen, vorzugsweise teleskopierbaren, Lenkerarm 36. Ein Ende des Lenkerarms 36 ist gelenkig im Bereich eines oberen Randes mit dem Schildkörper 27 verbunden. Das gegenüberliegende Ende des Lenkerarms 36 ist mit dem Laufwerk 19 verbunden, und zwar insbesondere gemäß dem gezeigten Ausführungsbeispiel (Fig. 2 und 3) mit einem oberen Ende der vor dem Laufwerk 29 befestigten längeren Lasche 30 der Aufhängung 26. Der teleskopartige Lenkerarm 36 ist federvorgespannt längenveränderlich, und zwar so, dass eine Federkraft den Lenkerarm 36 in ausfahrendem bzw. verlängerndem Sinne vorspannt. Bei der Anordnung des mindestens einen Lenkerarms 36 oberhalb der teleskopartigen Aufhängung 26 drückt der Lenkerarm 36 aufgrund seiner Federvorspannung schräg von oben auf die Rückseite des Schildkörpers 27, wodurch insbesondere der Schildkörper 27 des Räumschilds 25 gegen die Lauffläche 17 der Abdeckung 15 gedrückt wird. Infolge der elastischen Federvorspannung des mindestens einen Lenkerarms 36 im sich längenden und/oder teleskopisch ausfahrenden Sinne kommt es insbesondere in Kombination mit der parallelogrammartigen höhenveränderlichen Aufhängung 26 des Schildkörpers 27 vor dem Laufwerk 19 zu einer flexiblen und in der Höhe und/oder im Anpressdruck oder der Anpresskraft gegen die Lauffläche 17 anpassbaren Anordnung des Räumschilds 25 vor dem Laufwerk 19 der Räumerbrücke 11.

An einen zur Lauffläche 17 weisenden unteren Randbereich 37 des Schildkörpers 27 sind ein beim hier gezeigten Räumschild 25 zwei in Bewegungsrichtung der Räumerbrücke 11 hintereinander angeordnete Abstreifer 38 und 39 befestigt. Alle Abstreifer 38, 39 erstrecken sich durchgehend über die gesamte Breite des Räumschilds 25 und somit auch über die gesamte Breite der Lauffläche 17. Beide Abstreifer 38 und 39 sind auswechselbar mit dem unteren Bereich 37 des Schildkörpers 27 verschraubt, und zwar mit mehreren Schrauben. Durch mehrere Langlöcher 40 im unteren Endbereich des Schildkörpers 27 kann mindestens eine untere freie Abstreiferkante 41 des vorderen Abstreifers 38 hinsichtlich ihres Verlaufs an die Wölbung der Lauffläche 17 der Abdeckung 15 mit dem Rand 14 der Wandung 13 des Behandlungsbeckens 10 angepasst werden.

Der vordere Abstreifer 38 ist auf der Vorderseite des Schildkörpers 27, wo sich der anzuschiebende Schnee 34 sammelt, unter einem stumpfen Winkel von über 90° gegenüber der Lauffläche 17 geneigt. Der dahinter liegende Abstreifer 39 ist beim hier gezeigten Räumschild 25 nach hinten umgeklappt, sodass eine freie Abstreiferkante 41 des hinteren Abstreifers 39 zum Laufwerk 19 weist und somit unter einem Winkel von weniger als 90° zur Lauffläche 17 verläuft (Fig. 2 und 3).

Beide Abstreifer 38 und 39 sind aus einem elastisch nachgiebigen und/oder flexiblen Material gebildet. Hierbei handelt es sich um ein Elastomer, beispielsweise Polyurethan, das hoch verschleißfest ist. Der vordere Abstreifer 38 ist weniger flexibel als der hintere Abstreifer 39. Dazu ist der vordere Abstreifer 38 aus einem Elastomer mit mittlerer Shore-Härte, insbesondere 62 bis 72 Shore A, gebildet. Der hintere Abstreifer 39 ist entweder aus dem gleichen Material und gleicher Härte gebildet, aber dünner, wodurch er flexibler wird. Es ist auch denkbar, dass der hintere Abstreifer 39 alternativ oder zusätzlich aus einem weicheren Material als der vordere Abstreifer 38 gebildet ist. Durch die beiden aufeinanderfolgenden Abstreifer 38 und 39 wird erreicht, dass der vordere, härtere Abstreifer ein Großteil des Schnees 34 oder anderen Verunreinigungen von der Lauffläche 17 der Abdeckung 15 abschiebt und zu mindestens einer Seite neben der Abdeckung 15 abführt, während der darauffolgende hintere Abstreifer 39 im Wesentlichen nur dazu dient, die vom Schnee 34 zumindest weitestgehend geräumte Lauffläche 17 von Schneeresten und/oder Feuchtigkeit zu befreien, indem der weiche hintere Abstreifer 39 die Lauffläche quasi abzieht.

Infolge der flexiblen Abstreifer 38 und 39 wird auch erreicht, dass diese sich an die ballige Lauffläche 17 der Abdeckung 15 anschmiegen, sodass die Abstreiferkanten 41 beider Abstreifer 38 und 39, zumindest aber des hinteren Abstreifers 39, über die gesamte Breite der Lauffläche 17 lückenlos an derselben liegt, indem zumindest der hintere Abstreifer 39, vorzugsweise aber beide Abstreifer 38, 39, die von der federvorgespannten Aufhängung 26 gegen die Lauffläche 17 gedrückt werden. Dadurch kommt es zu einem vollständigen Räumen der Lauffläche 17 der Abdeckung 15 und einer mindestens teilweise Befreiung der Lauffläche 17 von Wasser oder dergleichen. Unterstützt wird das wirksame Räumen der Lauffläche 17 der Abdeckung 15 vom Räumschild 25 dadurch, dass durch den mindestens einen im ausfahrenden Sinne vorgespannten teleskopierbaren Lenkerarm 36 der durch die Aufhängung 26 flexibel und höhenveränderlich vor dem Laufwerk 19 gehaltene Schildkörper 27 nach unten gegen die Lauffläche 17 der Abdeckung 15 gedrückt wird. Dabei werden die Abstreifer 38 und 39 elastisch verformt, sodass sie sich an den gewölbten bzw. balligen Verlauf der Lauffläche 17 der Abdeckung 15 lückenlos anpassen und/oder anschmiegen. Infolge des mindestens einen elastisch längenveränderbaren Lenkerarm 36 und/oder des mit federnder Vorspannung erfolgenden Andrückens des Schildkörpers 27 vom mindestens einen Lenkerarm 36 gegen die Lauffläche 17 wird auch eine flexible Anpassung des Räumschilds 25, insbesondere der Abstreifer 38 und 39, an die Gestalt und den Verlauf der Lauffläche 17 herbeigeführt, wodurch auch Lageabweichungen oder sonstige Unregelmäßigkeiten der Abdeckung 15 und/oder auf der Lauffläche 17 flexibel ausgeglichen werden.

Der mindestens eine teleskopische Lenkerarm 36 kann im ausfahrenden Sinne federvorgespannt sein durch mindestens eine Feder oder Ausbildung des Lenkerarms 36 als Gasdruckfeder.

Die Fig. 2 zeigt die Betriebsstellung des Räumschilds 25, in der der Schildkörper 27 auf die Abdeckung 15 abgesenkt und die Abstreifer 38 und 39 elastisch und/oder mit Federvorspannung gegen die Lauffläche 17 gedrückt werden. Die Fig. 3 zeigt Ruhestellung des Räumschilds 25, bei der der Schildkörper 27 mit den Abstreifern 38 und 39 mittels der Aufhängung 26 von der Lauffläche 17 der Abdeckung 15 abgehoben ist.

Hierbei wird der mindestens eine Lenker 36 teleskopisch etwas eingefahren gegen die im ausfahrenden Sinne wirksame Federvorspannung. Die Federvorspannung des Lenkerarms 36 wird dadurch vergrößert. Durch einen Bolzen oder dergleichen ist die Aufhängung 26 beim in die Ruhestellung hochbewegten Räumschild 25 arretierbar.

Die Erfindung wurde vorstehend anhand eines Ausführungsbeispiels mit einer sich radial über den halben Durchmesser des Behandlungsbeckens 10 erstreckende Räumerbrücke 11 mit einem Laufwerk 19 an ihrem äußeren Endbereich beschrieben. Die Erfindung eignet sich aber auch für eine Räumerbrücke, die sich diametral über das gesamte zylindrische Behandlungsbecken 10 erstreckt und auch um eine mittige Säule im Behandlungsbecken 10 drehbar ist. Eine solche Räumerbrücke weist dann an ihren gegenüberliegenden Endbereichen jeweils ein Laufwerk 19 mit sich auf diametral gegenüberliegenden Stellen der kreisringförmigen Abdeckung 15 abstützenden Laufrädern 20 auf.

Die Erfindung eignet sich nicht nur für kreisrunde, zylindrische Behandlungsbecken 10 sondern auch für rechteckige und/oder quadratische Behandlungsbecken. Hier bewegt sich die Räumerbrücke nicht umlaufend auf einer kreisrunden Abdeckung sondern hin- und hergehend auf getrennten parallelen Abdeckungen 15 von Längswandungen des rechteckigen bzw. quadratischen Behandlungsbeckens.

Auch eignet sich die Erfindung nicht nur für Flüssigkeitsbehandlungseinrichtungen mit einer Räumerbrücke 11 sondern auch Flüssigkeitsbehandlungseinrichtungen mit Belüfterbrücken sowie kombinierten Räumer- und Belüfterbrücken.

Schließlich kann zusätzlich eine zum Beispiel elektrische Beheizung mindestens der Lauffläche 17 der Abdeckung 15 des Behandlungsbeckens 10 bei der erfindungsgemäßen Kläranlage, insbesondere ihrer Räumer oder Lüfterbrücke, vorgesehen sein.

### Bezugszeichenliste:

- 10: Behandlungsbecken
- 11: Räumerbrücke
- 12: Bodenplatte
- 13: Wandung
- 14: Rand
- 15: Abdeckung
- 16: Kante
- 17: Lauffläche
- 18: Träger
- 19: Laufwerk
- 20: Laufrad
- 21: Drehachse
- 22: Motor
- 23: Getriebe
- 24: Mantelfläche
- 25: Räumschild
- 26: Aufhängung
- 27: Schildkörper
- 29: Arm
- 30: Lasche
- 31: Lasche
- 32: Gelenk
- 33: Betätigungsarm
- 34: Schnee
- 35: Halter
- 36: Lenkerarm
- 37: unterer Randbereich
- 38: Abstreifer (vorderer)
- 39: Abstreifer (hinterer)
- 40: Langloch
- 41: Abstreiferkante

## Patentansprüche

1. Flüssigkeitsbehandlungseinrichtung, vorzugsweise für eine Kläranlage, mit einem Behandlungsbecken (10) und einer darauf verfahrbaren Räumerbrücke (11) oder Lüfterbrücke, wobei das Behandlungsbecken (10) eine umlaufende Wandung (13) mit einem oberen Rand (14) sowie eine eine obere Lauffläche (17) aufweisende Abdeckung (15) auf dem oberen Rand (14) aufweist, wobei mindestens die Lauffläche (17) der Abdeckung (15) quer zur Bewegungsrichtung des Laufwerks (19) auf der Abdeckung (15) gesehen ballig ausgebildet ist zur Bildung einer mittigen Überhöhung der Lauffläche (17), und die Räumerbrücke (11) oder Lüfterbrücke mindestens an einem Ende oder Endbereich ein sich auf der Abdeckung (15) des oberen Rands (14) des Behandlungsbeckens (10) abstützendes Laufwerk (19) mit wenigstens einem sich auf der Abdeckung (15) abwälzenden Laufrad (20) aufweist, **dadurch gekennzeichnet, dass** in Bewegungsrichtung des Laufwerks (19) gesehen vor demselben ein flexibel sich an die Lauffläche (17) der Abdeckung (15) anpassendes Räumschild (25) angeordnet ist, und dass das oder das jeweilige Laufrad (20) des oder des jeweiligen Laufwerks (19) eine profilierte Mantelfläche (24) aufweist.

2. Flüssigkeitsbehandlungseinrichtung nach Anspruch 1, **dadurch gekennzeichnet, dass** das Räumschild (25) flexibel und/oder höhenveränderlich und/oder höhenverstellbar und/oder mit einstellbarem Anpressdruck vor dem jeweiligen Laufwerk (19) der Räumerbrücke (11) befestigt ist.

3. Flüssigkeitsbehandlungseinrichtung nach Anspruch 1 oder 2, **dadurch gekennzeichnet, dass** das Räumschild (25) mit einer parallelogrammartigen Aufhängung (26) vor dem jeweiligen Laufwerk (19) der Räumerbrücke (11) gelagert ist, indem das Räumschild (25) mit der Aufhängung (26) flexibel und/oder selbsttätig an die Lauffläche (17) anpassbar vor dem jeweiligen Laufwerk (19) aufgehängt ist.

4. Flüssigkeitsbehandlungseinrichtung nach einem der vorhergehenden Ansprüche, **dadurch gekennzeichnet, dass** das Räumschild (25) mindestens einen vorzugsweise elastischen und/oder flexiblen Abstreifer (38, 39) aufweist, insbesondere zwei hintereinander angeordnete Abstreifer (38, 39), wobei bevorzugt der dem ersten vorderen Abstreifer (38) nachfolgenden hintere Abstreifer (39) elastischer ist als der erste vordere Abstreifer (38).

5. Flüssigkeitsbehandlungseinrichtung nach Anspruch 4, **dadurch gekennzeichnet, dass** der mindestens eine Abstreifer (38, 39) sich elastisch und/oder flexibel an die ballige Lauffläche (17) der Abdeckung (15) auf dem Rand (14) der Wandung (13) des Behandlungsbeckens (10) anschmiegt, vorzugsweise mit einstellbarer Anpresskraft.

6. Flüssigkeitsbehandlungseinrichtung nach Anspruch 4, **dadurch gekennzeichnet, dass** der mindestens eine Abstreifer (38) mittels der Aufhängung (26) höhenverstellbar und/oder hinsichtlich seines Anpressdrucks oder seiner Anpresskraft gegen die Lauffläche (17) veränderlich einstellbar ist, vorzugsweise von einer auf der Lauffläche (17) anliegenden Betriebsstellung in eine von der Lauffläche (17) beabstandeten und/oder abgehobenen Ruhestellung.

7. Flüssigkeitsbehandlungseinrichtung nach Anspruch 6, **dadurch gekennzeichnet, dass** das Räumschild (25) in seiner Ruhestellung, in der der mindestens eine Abstreifer (38) von der Lauffläche (17) abgehoben ist, arretierbar ist und/oder das Räumschild (25) mit seinem mindestens einen Abstreifer (38) in der Betriebsstellung gegen die Lauffläche (17) der Abdeckung (15) drückbar ist, vorzugsweise unter elastischer Verformung und/ oder flexibler Anpassung und/oder Vorspannung des mindestsens einen Abstreifers (38) an die ballige Lauffläche (17) der Abdeckung (15).

8. Flüssigkeitsbehandlungseinrichtung nach Anspruch 4, **dadurch gekennzeichnet, dass** wenigstens eine Aufhängung (26) flexibel ausgebildet ist, indem sie das Räumschild (25) mit dem mindestens einen Abstreifer (38, 39) gegen die Lauffläche (17) der Abdeckung (15) drückt und sich der mindestens eine Abstreifer (38, 39) an den Verlauf der balligen Lauffläche (17) der Abdeckung (15) elastisch und flexibel anpasst und/oder sich an die Lauffläche (17) anschmiegt.

9. Flüssigkeitsbehandlungseinrichtung nach Anspruch 4, **dadurch gekennzeichnet, dass** das Räumschild (25) mit seinem mindestens einen Abstreifer (38, 39) in der Betriebsstellung von der Aufhängung (26) in Richtung zur Lauffläche (17) der Abdeckung (15) federvorgespannt ist, vorzugsweise derart, dass durch die Federvorspannung der mindestens eine Abstreifer (38, 39) oder mindestens ein Abstreifer (38, 39) des Räumschilds (25) durch seine elastische Verformung flexibel an die ballige und mittig überhöhte Lauffläche (17) der Abdeckung (15) anpassbar ist.

10. Flüssigkeitsbehandlungseinrichtung nach einem der vorhergehenden Ansprüche, **dadurch gekennzeichnet, dass** das oder jedes Laufrad (20) der Räumerbrücke (11) als Vollgummirad, vorzugsweise als Vollgummirad mit profilierter oder mehrstufig profilierter Mantelfläche (24), mit mittlerer Shore-Härte, vorzugsweise zwischen 60 und 75 Shore A, ausgebildet ist.

11. Flüssigkeitsbehandlungseinrichtung nach einem der vorhergehenden Ansprüche, **dadurch gekennzeichnet, dass** die mittige Überhöhung der balligen Lauffläche (17) der Abdeckung (15) gegenüber beiderseitigen Rändern (14) der Lauffläche (17) und/oder Abdeckung (15) 1 mm bis 10 mm, vorzugsweise 2 mm bis 6 mm oder 2 mm bis 5 mm, beträgt.

## Claims

1. Liquid treatment device, preferably for a treatment plant, having a treatment tank (10) and a scraper bridge (11) or fan bridge which can be moved thereon, wherein the treatment tank (10) has a circumferential wall (13) with an upper periphery (14), and also a cover (15), which has an upper running surface (17), on the upper periphery (14), wherein at least the running surface (17) of the cover (15) is of crowned form, as seen transversely with respect to the movement direction of the drive (19) on the cover (15), in order to form a central camber of the running surface (17), and the scraper bridge (11) or fan bridge has, at least at an end or end region, a drive (19) which is supported on the cover (15) of the upper periphery (14) of the treatment tank (10) and which has at least one running wheel (20) which rolls on the cover (15), **characterized in that**, as seen in the movement direction of the drive (19), a scraping blade (25) which can be adapted to the running surface (17) of the cover (15) in a flexible manner is arranged in front of said drive, and **in that** the or the respective running wheel (20) of the or of the respective drive (19) has a profiled lateral surface (24).

2. Liquid treatment device according to Claim 1, **characterized in that** the scraping blade (25) is fastened in front of the respective drive (19) of the scraper bridge (11) in a flexible and/or height-variable and/or height-adjustable manner and/or with a settable contact pressure.

3. Liquid treatment device according to Claim 1 or 2, **characterized in that** the scraping blade (25) is mounted in front of the respective drive (19) of the scraper bridge (11) by means of a parallelogram-like suspension (26), **in that** the scraping blade (25) is suspended in front of the respective drive (19) by means of the suspension (26) so as to be able to be adapted to the running surface (17) in a flexible and/or automatic manner.

4. Liquid treatment device according to one of the preceding claims, **characterized in that** the scraping blade (25) has at least one preferably elastic and/or flexible scraper (38, 39), in particular two scrapers (38, 39) which are arranged in succession, wherein preferably the rear scraper (39) following the first front scraper (38) is more elastic than the first front scraper (38).

5. Liquid treatment device according to Claim 4, **characterized in that** the at least one scraper (38, 39) conforms to the crowned running surface (17) of the cover (15) on the periphery (14) of the wall (13) of the treatment tank (10) in an elastic and/or flexible manner, preferably with a settable contact force.

6. Liquid treatment device according to Claim 4, **characterized in that**, by means of the suspension (26), the at least one scraper (38) is height-adjustable and/or settable in a variable manner with regard to its contact pressure or its contact force against the running surface (17), preferably from an operating position bearing against the running surface (17) into a rest position spaced apart and/or lifted off from the running surface (17) .

7. Liquid treatment device according to Claim 6, **characterized in that** the scraping blade (25) can be locked in its rest position, in which the at least one scraper (38) is lifted off from the running surface (17), and/or the scraping blade (25) can be pushed with its at least one scraper (38) in the operating position against the running surface (17) of the cover (15), preferably with elastic deformation and/or flexible adaptation and/or preloading of the at least one scraper (38) against the crowned running surface (17) of the cover (15) .

8. Liquid treatment device according to Claim 4, **characterized in that** at least one suspension (26) is of flexible form **in that** it pushes the scraping blade (25) with the at least one scraper (38, 39) against the running surface (17) of the cover (15) and the at least one scraper (38, 39) adapts to the profile of the crowned running surface (17) of the cover (15), and/or conforms to the running surface (17), in an elastic and flexible manner.

9. Liquid treatment device according to Claim 4, **characterized in that** the scraping blade (25), with its at least one scraper (38, 39) in the operating position, is spring-preloaded in the direction towards the running surface (17) of the cover (15) by the suspension (26), preferably in such a way that the spring preloading makes it possible for the at least one scraper (38, 39) or at least one scraper (38, 39) of the scraping blade (25) to be adapted, by way of elastic deformation thereof, to the crowned and centrally cambered running surface (17) of the cover (15) in a flexible manner.

10. Liquid treatment device according to one of the preceding claims, **characterized in that** the or each running wheel (20) of the scraper bridge (11) is in the form of a solid rubber wheel, preferably in the form of a solid rubber wheel with a lateral surface (24) which has profiling or multi-stage profiling, with an average Shore hardness, preferably between 60 and 75 Shore A.

11. Liquid treatment device according to one of the preceding claims, **characterized in that** the central camber of the crowned running surface (17) of the cover (15) in relation to mutual peripheries (14) of the running surface (17) and/or cover (15) is 1 mm to 10 mm, preferably 2 mm to 6 mm or 2 mm to 5 mm.

## Revendications

1. Dispositif de traitement de liquides, de préférence pour une station d'épuration, avec un bassin de traitement (10) et un pont racleur (11) ou un pont ventilateur déplaçable sur celui-ci, le bassin de traitement (10) présentant une paroi périphérique (13) avec un bord supérieur (14) ainsi qu'un couvercle (15) présentant une surface de roulement supérieure (17) sur le bord supérieur (14), au moins la surface de roulement (17) du couvercle (15), vue transversalement à la direction de déplacement du mécanisme de roulement (19) sur le couvercle (15), étant configurée sous forme bombée pour former une surépaisseur centrale de la surface de roulement (17), et le pont racleur (11) ou le pont ventilateur présentant au moins à une extrémité ou zone d'extrémité un mécanisme de roulement (19) s'appuyant sur le couvercle (15) du bord supérieur (14) du bassin de traitement (10) avec au moins une roue de roulement (20) roulant sur le couvercle (15), **caractérisé en ce qu'**une lame de raclage (25) s'adaptant de manière flexible à la surface de roulement (17) du couvercle (15) est agencée devant le mécanisme de roulement (19), vu dans la direction de déplacement de celui-ci, et **en ce que** la roue de roulement ou la roue de roulement respective (20) du mécanisme de roulement ou du mécanisme de roulement respectif (19) présente une surface d'enveloppe profilée (24) .

2. Dispositif de traitement de liquides selon la revendication 1, **caractérisé en ce que** la lame de raclage (25) est fixée de manière flexible et/ou variable en hauteur et/ou réglable en hauteur et/ou avec une pression d'application ajustable devant le mécanisme de roulement respectif (19) du pont racleur (11).

3. Dispositif de traitement de liquides selon la revendication 1 ou 2, **caractérisé en ce que** la lame de raclage (25) est montée avec une suspension (26) en forme de parallélogramme devant le mécanisme de roulement respectif (19) du pont racleur (11), par le fait que la lame de raclage (25) est suspendue avec la suspension (26) de manière flexible et/ou de manière adaptable automatiquement à la surface de roulement (17) devant le mécanisme de roulement respectif (19).

4. Dispositif de traitement de liquides selon l'une quelconque des revendications précédentes, **caractérisé en ce que** la lame de raclage (25) présente au moins un racloir (38, 39) de préférence élastique et/ou flexible, notamment deux racloirs (38, 39) agencés l'un derrière l'autre, le racloir arrière (39) qui suit le premier racloir avant (38) étant de préférence plus élastique que le premier racloir avant (38).

5. Dispositif de traitement de liquides selon la revendication 4, **caractérisé en ce que** l'au moins un racloir (38, 39) épouse de manière élastique et/ou flexible la surface de roulement bombée (17) du couvercle (15) sur le bord (14) de la paroi (13) du bassin de traitement (10), de préférence avec une force d'application ajustable.

6. Dispositif de traitement de liquides selon la revendication 4, **caractérisé en ce que** l'au moins un racloir (38) est réglable en hauteur au moyen de la suspension (26) et/ou ajustable de manière variable en ce qui concerne sa pression d'application ou sa force d'application contre la surface de roulement (17), de préférence d'une position de fonctionnement reposant sur la surface de roulement (17) à une position de repos espacée et/ou soulevée de la surface de roulement (17).

7. Dispositif de traitement de liquides selon la revendication 6, **caractérisé en ce que** la lame de raclage (25) peut être bloquée dans sa position de repos, dans laquelle l'au moins un racloir (38) est soulevé de la surface de roulement (17), et/ou la lame de raclage (25) peut être pressée avec son au moins un racloir (38) dans la position de fonctionnement contre la surface de roulement (17) du couvercle (15), de préférence avec une déformation élastique et/ou une adaptation flexible et/ou une précontrainte de l'au moins un racloir (38) sur la surface de roulement bombée (17) du couvercle (15).

8. Dispositif de traitement de liquides selon la revendication 4, **caractérisé en ce qu'**au moins une suspension (26) est configurée sous forme flexible, par le fait qu'elle presse la lame de raclage (25) avec l'au moins un racloir (38, 39) contre la surface de roulement (17) du couvercle (15) et l'au moins un racloir (38, 39) s'adapte de manière élastique et flexible au tracé de la surface de roulement bombée (17) du couvercle (15) et/ou épouse la surface de roulement (17).

9. Dispositif de traitement de liquides selon la revendication 4, **caractérisé en ce que** la lame de raclage (25) est précontrainte par ressort avec son au moins un racloir (38, 39) dans la position de fonctionnement depuis la suspension (26) en direction de la surface de roulement (17) du couvercle (15), de préférence de telle sorte que, grâce à la précontrainte par ressort, l'au moins un racloir (38, 39) ou au moins un racloir (38, 39) de la lame de raclage (25) peut être adapté de manière flexible, par sa déformation élastique, à la surface de roulement (17) bombée et surépaissie au centre du couvercle (15).

10. Dispositif de traitement de liquides selon l'une quelconque des revendications précédentes, **caractérisé en ce que** la ou chaque roue de roulement (20) du pont racleur (11) est configurée sous forme de roue en caoutchouc plein, de préférence sous forme de roue en caoutchouc plein avec une surface d'enveloppe (24) profilée ou profilée à plusieurs étages, ayant une dureté Shore moyenne, de préférence comprise entre 60 et 75 Shore A.

11. Dispositif de traitement de liquides selon l'une quelconque des revendications précédentes, **caractérisé en ce que** la surépaisseur centrale de la surface de roulement bombée (17) du couvercle (15) par rapport aux bords (14) des deux côtés de la surface de roulement (17) et/ou du couvercle (15) est de 1 mm à 10 mm, de préférence de 2 mm à 6 mm ou de 2 mm à 5 mm.
